# EUROPÄISCHE PATENTSCHRIFT

(11) **EP 0 389 880 B1**
(45) Veröffentlichungstag und Bekanntmachung des Hinweises auf die Patenterteilung: **28.09.1994**
(21) Anmeldenummer: 90104946.0
(22) Anmeldetag: 15.03.1990
(51) Int. Cl.: E03F 7/02, E03F 5/14, B01D 21/02

(54) **Sinkkasten für insbesondere Abwasser**
Sedimentation reservoir, especially for waste water
Réservoir de sédimentation, spécialement pour eaux usées

(30) Priorität: 31.03.1989 DE 8903952 U
(43) Veröffentlichungstag der Anmeldung: 03.10.1990
(73) Patentinhaber: basika Entwässerungen GmbH, D-42111 Wuppertal (DE)
(72) Erfinder: Drecker, Rolf, D-5600 Wuppertal 1 (DE)
(74) Vertreter: Patentanwälte Dr. Solf & Zapf

(56) Entgegenhaltungen:
- DE-A- 2 623 460
- DE-A- 3 002 180
- DE-C- 3 536 053
- FR-A- 2 311 897
- FR-E- 87 893
- US-A- 2 260 920

## Beschreibung

Die Erfindung betrifft einen Sinkkasten nach dem Oberbegriff des Anspruchs 1.

Es ist der Zweck eines Sinkkastens, wenigstens vorübergehend insbesondere Abwasser aufzunehmen. Es sind Sinkkästen ohne und mit wenigstens einer Ablauföffnung bekannt, an die - sofern sie vorhanden ist - eine Abflußleitung angeschlossen ist. Zwecks Vermeidung von Rückstau im Sinkkasten oder Geruchsbelästigung ist es auch schon bekannt, eine durch ein Verschlußglied verschließbare Ablauföffnung vorzusehen, die durch eine von außen oder bei abgenommemem Deckel von innen zugängliche Verstellvorrichtung wahlweise zu öffnen oder zu schließen ist. Zur Vermeidung von üblem Geruch kann der Ablauföffnung auch ein Geruchsverschluß im Sinne eines Siphons zugeordnet sein.

Ein Sinkkasten der eingangs genannten Art ist aus der FR-A-1 556 161 bekannt. Das Schließglied ist bei diesem bekannten Sinkkasten als Klappdeckelteil ausgebildet, das über ein Scharnier am Deckel angelenkt und mittels einer dem Scharnier gegenüberliegenden, den Rand des Deckelteils durchsetzenden Schraube, die in ein Gewinde im Deckel eingreift, in der Schließstellung an diesem festsetzbar ist. Das als Klappdeckel ausgebildete Schließglied ist aufgrund seiner Scharnieranlenkung zwischen seiner Schließstellung und seiner Offenstellung manuell verstellbar. Ein spezieller Mechanismus zur Deckelverstellung ist nicht vorgesehen. Da das als Klappdeckel ausgebildete Schließglied in seiner Schließstellung auf der Oberseite des Deckels aufliegt und von dieser Oberseite übersteht, bildet es Stolperkanten. Bei aufgeklapptem Schließglied ist die Einlaßöffnung des Deckels ungeschützt offen und stellt daher eine Unfallgefahr dar.

Der Erfindung liegt die Aufgabe zugrunde, einen Sinkkasten der eingangs genannten Art unfall- und insbesondere stolpersicher auszugestalten.

Gelöst wird diese Aufgabe durch die kennzeichnenden Merkmale des Anspruchs 1. Vorteilhafte Weiterbildungen der Erfindung sind in den Unteransprüchen angegeben.

Jeder Schließglied des erfindungsgemäßen Sinkkastens füllt demnach in der Schließstellung, in der seine Oberkante in derselben Ebene liegt wie die Oberseite des stationären Deckelteils, die zugehörige Einlaßöffnung dieses Teils aus. Dadurch wird erreicht, daß bei in Schließstellung befindlichem Schließglied keinerlei Stolperkanten vorhanden sind. Da ferner die Offenstellung des Schließglieds dadurch erzielt wird, daß es zur Bildung eines ringförmigen Öffnungsspalts zwischen den Dichtflüchen des Schließglieds und des stationären Deckelteils durch einen von außen zugänglichen Verstellmechanismus senkrecht zur Ebene des stationären Deckelteils verstellbar ist, wird eine Unfallgefahr durch eine ungeschützte offenstehende Einlaßöffnung vermieden, da diese Einlaßöffnung erfindungsgemäß auch bei in Offenstellung befindlichem Schließglied durch dieses im wesentlichen abgedeckt ist.

Nachfolgend soll die Erfindung anhand der Zeichnungen näher erläutert werden.

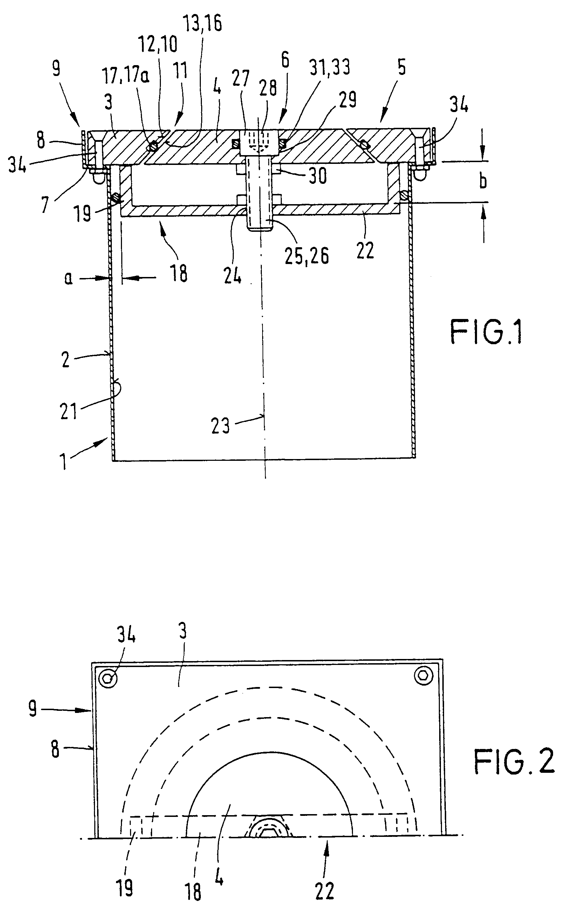

Es zeigt
- Fig. 1: einen erfindungsgemäß ausgestalteten Sinkkasten im vertikalen Schnitt
- Fig. 2: eine Hälfte des Sinkkastens in der Draufsicht;
- Fig. 3-6: Sinkkästen in abgewandelten Ausgestaltungen.

Die wesentlichen Teile des mit 1 bezeichneten Sinkkastens sind ein topfförmiges Gehäuse 2, ein aus einem stationären Deckelteil 3 und einem beweglichen Deckelteil 4 bestehender Deckel 5 und ein Verstellmechanismus 6 zum wahlweisen Verstellen des beweglichen Deckelteils 4.

Das Gehäuse 2 ist von hohlzylindrischer Form. An seinem oberen freien Rand trägt es einen flanschförmigen Kragen 7 quadratischer Form, der mit an seinem Umfang vertikal nach oben ragenden Randstreifen 8 einen quadratischen Einlegerahmen 9 für den Deckel 5 bildet.

Das stationäre Deckelteil 3 weist eine zentrale Öffnung 11 mit einer kegelförmigen, nach unten divergierenden Wandung 12 auf, deren Größe und Form der bewegliche Deckelteil 4 mit seiner kegelförmigen, nach oben konvergierenden Umfangswand 13 so angepaßt ist, daß er in seiner Schließstellung die Öffnung 11 etwa ausfüllt, wobei er mit dem stationären Deckelteil 3 abschließt, d.h. die Ober- und Unterseiten der Deckelteile 3, 4 liegen in einer Ebene, wobei die kegelförmige Wandung 12 der Öffnung 11 und die kegelförmige Umfangswand 13 Dichtflächen 10, 16 bilden, die zusätzlich durch einen Dichtungsring 17 gegeneinander abgedichtet sind, der in einer in die kegelförmige Wandung 12 des stationären Deckelteils 3 eingearbeitete Ringnut 17a eingesetzt sind.

Der Verstellmechanismus 6 zum wahlweisen Öffnen und Schließen durch Verstellen des beweglichen Deckelteils 4 quer zur Ebene des Deckels 5 weist einen U-förmigen, die Öffnung 11 in einer diametralen Position unterbrückenden Bügel 18 auf, dessen aufwärts gerichtete Schenkel 19 einen Abstand a von der Innenwand 21 des Gehäuses 2 aufweisen, und dessen horizontaler Steg 22 einen mit b bezeichneten Abstand von der Unterseite des Deckels 5 aufweist, der größer ist, als der Verstellweg des beweglichen Deckelteils 4. In der vertikalen Mittelachse 23 des Gehäuses 2 befindet sich im Steg 22 eine vertikale Gewindebohrung 24, in die eine sich nach oben erstreckende Verstellschraube 25 eingeschraubt ist, die das bewegliche Deckelteil 4 in einer stufenförmigen Ausbohrung für den Schaft 26 und den Kopf 27 der Schraube 25 durchfaßt und mit ihrem Angriffselement in Form eines Innensechskants 28 von oben frei zugänglich ist. Der Kopf 27 ist gegenüber der Wandung der ihn aufnehmenden Ausbohrung 29 durch eine Ringdichtung 31 abgedichtet, die in einer Ringnut 33 in der Wand der Ausbohrung 29 eingesetzt ist.

Durch Drehen der Schraube 25 läßt sich der bewegliche Deckelteil 4 in seine nicht dargestellte Offenstellung herunterschrauben, in der zwischen den Dichtflächen 10, 16 der Deckelteile 3, 4 ein ringförmiger Öffnungsspalt vorhanden ist, durch den Wasser oder Abwasser in den Sinkkasten 1 strömen kann. Zur Vermeidung von üblem Geruch aus dem Sinkkasten 1 oder eines Rückstaus wird das bewegliche Deckelteil 4 mittels der Schraube 25 gegen den durch die Dichtflächen 10, 16 gebildeten Sitz gepreßt, wobei die Öffnung 11 dicht verschlossen wird.

In dieser Schließstellung schließen die Deckelteile 3, 4 oberseitig miteinander ab, so daß keine Stolperkanten vorhanden sind.

Das stationäre Deckelteil 3 ist durch vier Befestigungsschrauben 34 im Einlegerahmen 9 gehalten, die das bewegliche Deckelteil 4 und den flanschförmigen Kragen 7 in Durchgangslöchern durchfassen und in an der Unterseite des flanschförmigen Kragens 7 angeordnete Muttern einfassen.

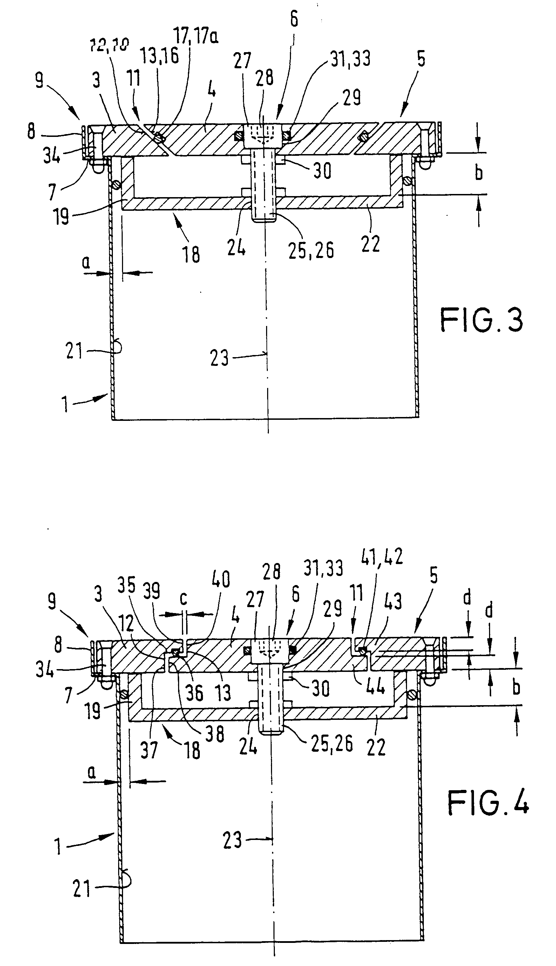

Das Ausführungsbeispiel gemäß Fig. 3, bei dem gleiche Teile mit gleichen Bezugszeichen versehen sind, unterscheidet sich vom vorbeschriebenen lediglich dadurch, daß die kegelförmigen Dichtflächen 10, 16 entgegengesetzt divergent sind, so daß der bewegliche Deckelteil 4 in seine Offenstellung hochgeschraubt und in seine Schließstellung heruntergeschraubt werden muß. Außerdem befinden sich die Ringnut 17a und der Dichtungsring 17 in der Dichtfläche 16 des beweglichen Deckelteils 4.

Bei beiden vorbeschriebenen Ausführungsbeispielen ist auf dem Schraubenschaft 26 ein Sicherungselement 30 zur axialen Fixierung des Deckelteils 3 an der Schraube 25 vorgesehen.

Beim Ausführungsbeispiel gemäß Fig. 4 sind die Wandung 12 der Öffnung 11 im stationären Deckelteil 3 und die Umfangswand 13 des beweglichen Deckelteils 4 so nach oben konvergent Z-förmig gestuft, daß in der Schließstellung des beweglichen Deckelteils 4, in der es die Öffnung 11 ausfüllt, die radialen Dichtflächenteile 35, 36 aneinaderliegen. Dabei können die axialen Wandungs- bzw. Umfangsflächenteile 37, 38, 39, 40 einen Abstand c voneinander aufweisen.

Die den Dichtungsring 41 aufnehmende Ringnut 42 kann im radialen Dichtflächenteil 35 der Dichtfläche des stationären Deckelteils 3 oder im radialen Dichtflächenteil 36 des beweglichen Deckelteils 4 angeordnet sein. Da die Dicken d der einander übergreifenden Flanschteile 43, 44 aneinander angepaßt bzw. gleich bemessen sind, schließen auch bei diesem Ausführungsbeispiel die Deckelteile 3, 4 in der Schließstellung mit ihren Ober- und Unterseiten ab, so daß oberseitig ebenfalls keine Stolperkante vorhanden ist. Zum Öffnen und Schließen wird das bewegliche Deckelteil 4 mittels des Verstellmechanismus 6 herunter und wieder herauf geschoben.

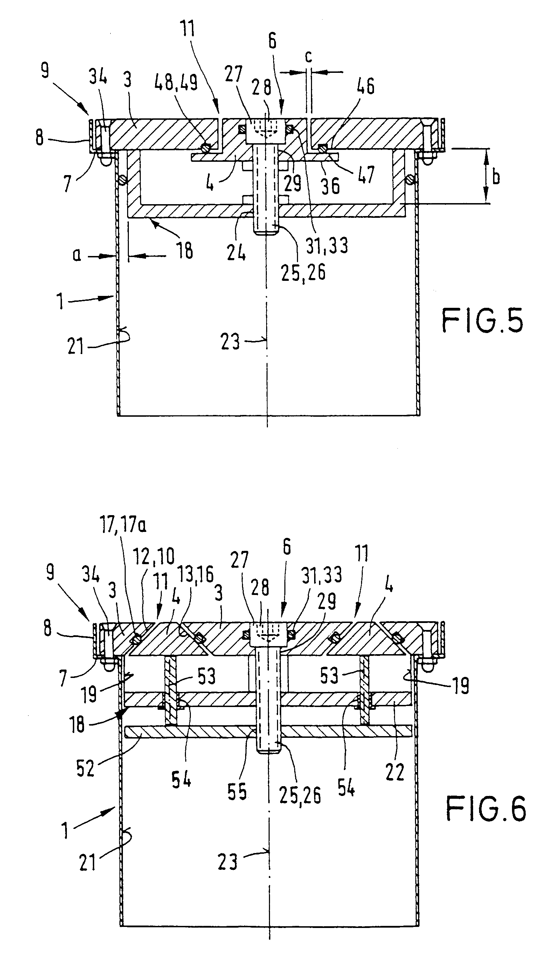

Beim Ausführungsbeispiel nach Fig. 5 untergreift das bewegliche Deckelteil 4 den unteren Rand der hier zylindrischen Öffnung 11 im stationären Deckelteil 3 mit einem Flansch 36, so daß die hier mit 46, 47 bezeichneten Dichtflächen durch die Unterseite des stationären Deckelteils 3 und die Oberseite des Flansches 36 gebildet sind. Auch hier sind die Dichtflächen 46, 47 gegeneinander durch eine Ringdichtung 31 abgedichtet, die in einer Ringnut 33 in der Dichtfläche 46 des stationären Deckelteils 3 eingesetzt ist. Der Durchmesser der Öffnung 11 kann etwas größer bemessen sein, als der Durchmesser des beweglichen Deckelteils 4, so daß zwischen den Wandungen 12, 13 ein Ringspalt der Breite c besteht. Das Deckelteil 4 braucht deshalb aus der Öffnung 11 nicht völlig herausgezogen zu werden, um schon einen Ringspalt freizugeben.

Hier sind eine Ringnut 48 und ein Dichtungsring 49 in der Unterseite des Deckelteils 4 am Flansch 36 gegenüberliegens angeordnet.

Beim Ausführungsbeispiel gemäß Fig. 6 sind anstelle einer zentralen Öffnung 11 zwei einander diametral gegenüberliegende oder mehrere auf den Umfang verteilte Öffnungen 11 im stationären Deckelteil 3 vorgesehen, in denen sich bewegliche Deckelteile 4 entsprechender Anzahl und Abmessung befinden, wobei die Dichtflächen 10, 16 zwischen dem stationären Deckelteil 3 und den beweglichen Deckelteilen 4 wie beim ersten Ausführungsbeispiel divergent bzw. konisch verlaufen. Der Antrieb der beweglichen Deckelteile 4 erfolgt gemeinsam durch eine in einem Abstand unterhalb des Bügels 18 angeordnete, steg- oder plattenförmige Traverse 52, von der vertikal nach oben Stangen 53 ausgehen, die den Steg 22 des Bügels 18 in Führungslöchern 54 durchfassen und mit den beweglichen Deckelteilen 4 verbunden sind. Durch Drehen der bei diesem Ausführungsbeispiel länger ausgebildeten und die Traverse 52 in einem Gewindeloch 55 durchfassenden Schraube 25 lassen sich die beweglichen Deckelteile 4 durch Drehen der Schraube 25 gemeinsam in die Offen- bzw. Schließstellung verstellen.

Bei diesem Ausführungsbeispiel kann die Schraube 25 den Bügel 18 in einem freien Durchgangsloch durchfassen, und sie kann im stationären Deckelteil 3 gegen axiale Verschiebung gesichert sein.

Bei allen Ausführungsbeispielen lassen sich die die Ringdichtungen aufnehmenden Ringnuten in der Dichtfläche des stationären oder beweglichen Deckelteils 3, 4 anordnen. Die Anordnung in der jeweils oberen Dichtfläche ist aus Verschmutzungsgründen von Vorteil und zwar insbesondere dann, wenn die Dichtungsringe, vorzugsweise O-Ringe, die sie aufnehmende Dichtfläche überragen.

## Patentansprüche

1. Sinkkasten für Abwasser, bestehend aus einem Gehäuse (2) und einem darauf gesetzten Deckel (5), der wenigstens eine Einlaßöffnung (11) mit einem Schließglied (4) aufweist, wobei das an einem stationären Teil (3) des Deckels (5) gehaltene Schließglied (4) wahlweise zwischen einer Schließstellung und einer Offenstellung verstellbar ist,
dadurch **gekennzeichnet,**
daß jedes Schließglied (4) aus der Schließstellung, in der es die zugehörige Einlaßöffnung (11) ausfüllt und in der seine Oberseite in derselben Ebene liegt wie die Oberseite des stationären Deckelteils (3) zur Bildung eines ringförmigen Öffnungsspalts zwischen den Dichtflächen (10, 16) des Schließglieds (4) und des stationären Deckelteils (3) durch einen von außen zugänglichen Verstellmechanismus (6) senkrecht zur Ebene des stationären Deckelteils (3) in die Offenstellung verstellbar ist.

2. Sinkkasten nach Anspruch 1,
dadurch **gekennzeichnet,**
daß das Schließglied (4) in seiner Offenstellung unterhalb oder oberhalb der Ebene des Deckels (5) steht.

3. Sinkkasten nach wenistens einem der Ansprüche 1 oder 2,
dadurch **gekennzeichnet,**
daß die Wandung (12) der Einlaßöffnung (11) und die Umfangsfläche (16) des Schließglieds (4) in Richtung auf die Schließstellung konvergieren.

4. Sinkkasten nach Anspruch 3,
dadurch **gekennzeichnet,**
daß die Wandung (12) der Einlaßöffnung (11) und die Umfangsfläche (13) des Schließgliedes Kegelflächen sind.

5. Sinkkasten nach Anspruch 3,
dadurch **gekennzeichnet,**
daß die Wandung (12) der Einlaßöffnung (11) und die Umfangsfläche (13) des Schließgliedes (4) stufenförmig konvergieren, vorzugsweise mit axialen und radialen Wandungs- bzw. Flächenteilen (35-40).

6. Sinkkasten nach wenigstens einem der Ansprüche 1 bis 5,
dadurch **gekennzeichnet,**
daß das Schließglied (4) unterseitig einen Flansch (36) aufweist, mit dem es in seiner Schließstellung an der Unterseite des Deckels (5) anliegt.

7. Sinkkasten nach Anspruch 6,
dadurch **gekennzeichnet,**
daß die Einlaßöffnung (11) zylindrisch ist und das Schließglied (4) in seiner Schließstellung mit einem zylindrischen Schließgliedteil in die Einlaßöffnung (11) einfaßt.

8. Sinkkasten nach Anspruch 5 oder 7,
dadurch **gekennzeichnet,**
daß in der Schließstellung des Schließglieds (4) die zylindrischen Wandungs- bzw. Flächenteile (37-40) einen kleinen Abstand (c) voneinander aufweisen.

9. Sinkkasten nach wenigstens einem der Ansprüche 1 bis 8,
dadurch **gekennzeichnet,**
daß in der Wandung (12) der Einlaßöffnung oder in der Umfangsfläche (13) des Schließglieds (4), vorzugsweise in der jeweils oberen Fläche (12, 13), eine zur Längsachse der Einlaßöffnung (11) konzentrische Ringut (17a, 42) vorgesehen ist, in der ein Dichtungsring (17, 41) vorzugsweise ein O-Ring, sitzt.

10. Sinkkasten nach Anspruch 9,
dadurch **gekennzeichnet,**
daß die Ringnut (42) und der Dichtungsring (41) in einem der beiden sich radial erstreckenden Wandungs- bzw. Umfangsflächenteile (35, 36) angeordnet sind.

11. Sinkkasten nach Anspruch 6 oder 7,
dadurch **gekennzeichnet,**
daß in der Oberseite (47) des Flansches (36) oder in der Unterseite des Deckels (5) dem Flansch (36) gegenüberliegend eine zum Schließglied (4) konzentrische Ringnut (48) vorgesehen ist, in der ein Dichtungsring (49), vorzugsweise ein O-Ring, eingesetzt ist.

12. Sinkkasten nach wenigstens einem der Ansprüche 9 bis 11,
dadurch **gekennzeichnet,**
daß die Dichtungsringe aus der Ringnut, in der sie sich befinden, herausragen.

13. Sinkkasten nach wenigstens einem der Ansprüche 1 bis 12,
dadurch **gekennzeichnet,**
daß der Verstellmechanismus (6) eine das Schließglied (4) vertikal durchfassende Schraube (25) aufweist, die an ihrem äußeren Ende ein Angriffselement (28) für ein Drehwerkzeug aufweist und mit ihrem inneren Ende eine am Sinkkasten (1) gehaltene Traverse (22) durchfaßt, wobei die Schraube entweder in der Traverse axial fixiert ist und das Schließglied (4) in einem Gewinde durchfaßt oder im Schließglied (4) axial fixiert ist und die Traverse (22) in einem Gewinde durchfaßt.

14. Sinkkasten nach Anspruch 13,
dadurch **gekennzeichnet,**
daß der Abstand (d) zwischen der Traverse (22) und der Unterseite des Deckels (5) größer ist, als der Verstellweg des Schließgliedes (4).

15. Sinkkasten nach Anspruch 12 oder 13,
dadurch **gekennzeichnet,**
daß die Traverse (22) durch einen U-förmigen Bügel (18) gebildet ist, dessen Schenkel (19) am stationären Deckelteil (5) befestigt sind.

16. Sinkkasten nach wenigstens einem der Ansprüche 13 bis 15,
dadurch **gekennzeichnet,**
daß die Schraube (25) einen Kopf (27) aufweist, der in einer stufenförmigen Ausbohrung (29) im Schließglied (4) aufgenommen ist.

17. Sinkkasten nach Anspruch 16,
dadurch **gekennzeichnet,**
daß in der Wandung der Ausbohrung (29) eine Ringnut (33) vorgesehen ist, in der ein Dichtungsring (31), vorzugsweise ein O-Ring, sitzt.

18. Sinkkasten nach wenigstens einem der Ansprüche 1 bis 17,
dadurch **gekennzeichnet,**
daß die Einlaßöffnung (11) in der Mitte des stationären Deckelteils (5) angeordnet ist.

19. Sinkkasten nach wenigstens einem der Ansprüche 1 bis 17,
dadurch **gekennzeichnet,**
daß mehrere, vorzugsweise außermittige Einlaßöffnungen (11) mit zugehörigen Schließgliedern (4) und ein für alle Schließglieder (4) gemeinsamer Verstellmechanismus (6) vorzugsweise zentral angeordnet sind.

20. Sinkkasten nach Anspruch 19,
dadurch **gekennzeichnet**,
daß der Verstellmechanismus (6) eine den Deckel (3) vertikal durchfassende Schraube (25) aufweist, die an ihrem äußeren Ende ein Angriffselement (28) für ein Drehwerkzeug aufweist und mit ihrem inneren Ende ein Tragteil (52) durchfaßt, wobei die Schraube (25) entweder im Tragteil (52) axial fixiert ist und den Deckel (3) in einem Gewinde durchfaßt oder im Deckel (3) axial fixiert ist und das Tragteil (52) in einem Gewinde durchfaßt, wobei das Tragteil (52) durch Zug- und Schubstangen (53) mit den Schließgliedern (4) verbunden ist, und wobei vorzugsweise das Tragteil (52) unterhalb einer am Sinkkasten (1) gehaltenen Traverse (22) angeordnet ist und die Zug- und Schubstangen (53) die Traverse in Führungslöchern (54) durchfassen.

21. Sinkkasten nach Anspruch 20,
dadurch **gekennzeichnet,**
daß die Schraube (25) einen Kopf (27) aufweist, der in einer stufenförmigen Ausbohrung (29) im stationären Deckelteil (3) aufgenommen ist.

## Claims

1. A sink box for waste water, comprising a housing (2) and a cover (5) which is mounted thereon and has at least one inlet opening (11) having a closure member (4), the closure member (4), which is held on a stationary part (3) of the cover (5), being selectively adjustable between a closed position and an open position, characterised in that each closure member (4) is adjustable from the closed position, in which it fills the associated inlet opening (11) and in which its top side is located in the same plane as the top side of the stationary cover part (3) to form an annular opening gap between the sealing surfaces (10, 16) of the closure member (4) and the stationary cover part (3), perpendicular to the plane of the stationary cover part (3) into the open position by an externally accessible adjusting mechanism (6).

2. A sink box as claimed in Claim 1, characterised in that the closure member (4) when in its open position is located below or above the plane of the cover (5).

3. A sink box as claimed in at least one of Claims 1 or 2, characterised in that the wall (12) of the inlet opening (11) and the circumferential surface (16) of the closure member (4) converge towards the closed position.

4. A sink box as claimed in Claim 3, characterised in that the wall (12) of the inlet opening (11) and the circumferential surface (13) of the closure member are conical surfaces.

5. A sink box as claimed in Claim 3, characterised in that the wall (12) of the inlet opening (11) and the circumferential surface (13) of the closure member (4) converge in a step-shaped manner, preferably with axial and radial wall parts or surface parts (35-40).

6. A sink box as claimed in at least one of Claims 1 to 5, characterised in that the bottom side of the closure member (4) has a flange (36) with which the closure member abuts against the bottom side of the cover (5) when the closure member is in its closed position.

7. A sink box as claimed in Claim 6, characterised in that the inlet opening (11) is cylindrical and a cylindrical part of the closure member (4) is located in the inlet opening (11) when the closure member is in its closed position.

8. A sink box as claimed in Claim 5 or 7, characterised in that the cylindrical wall or surface parts (37-40) are spaced a short distance (c) apart when the closure member (4) is in its closed position.

9. A sink box as claimed in at least one of Claims 1 to 8, characterised in that an annular groove (17a, 42) concentric to the longitudinal axis of the inlet opening (11) is provided in the wall (12) of the inlet opening or in the circumferential surface (13) of the closure member (4), preferably in the respective top surface (12, 13), a sealing ring (17, 41), preferably an O-ring, being seated in the said annular groove.

10. A sink box as claimed in Claim 9, characterised in that the annular groove (42) and the sealing ring (41) are disposed in one of the two radially extending wall or circumferential surface parts (35, 36).

11. A sink box as claimed in Claim 6 or 7, characterised in that an annular groove (48) concentric to the closure member (4) is provided in the top side (47) of the flange (36) or in the bottom side of the cover (5) opposite the flange (36), a sealing ring (49) preferably an O-ring, being disposed in the said annular groove.

12. A sink box as claimed in at least one of Claims 9 to 11, characterised in that the sealing rings project from the annular groove in which they are located.

13. A sink box as claimed in at least one of Claims 1 to 12, characterised in that the adjusting mechanism (6) has a screw (25) which passes vertically through the closure member (4) and which has at its outer end an element (28) for engagement of a turning tool and its inner end passes through a cross-member (22) held on the sink box (1), the screw either being axially fixed in the cross-member and passing through the closure member (4) in a screw-thread, or being axially fixed in the closure member (4) and passing through the cross-member (22) in a screw-thread.

14. A sink box as claimed in Claim 13, characterised in that the distance (d) between the cross-member (22) and the bottom side of the cover (5) is greater than the displacement travel of the closure member (4).

15. A sink box as claimed in Claim 12 or 13, characterised in that the cross-member (22) is formed by a U-shaped bar (18) whose limbs (19) are secured to the stationary cover part (5).

16. A sink box as claimed in at least one of Claims 13 to 15, characterised in that the screw (25) has a head (27) which is received in a stepped bore (29) in the closure member (4).

17. A sink box as claimed in Claim 16, characterised in that there is provided in the wall of the bore (29) an annular groove (33) in which a sealing ring (31), preferably an O-ring, is seated.

18. A sink box as claimed in at least one to 17, characterised in that the inlet opening (11) is disposed in the centre of the stationary cover part (5).

19. A sink box as claimed in at least one of Claims 1 to 17, characterised in that a plurality of preferably off-centre inlet openings (11) with associated closure members (4), and an adjusting mechanism (6) common to all the closure members (4), are disposed preferably centrally.

20. A sink box as claimed in Claim 19, characterised in that the adjusting mechanism (6) has a screw (25) which passes vertically through the cover (3) and which has at its outer end an element (28) for engagement of a turning tool and its inner end passes through a support part (52), the screw (28) either being axially fixed in the support part (52) and passing through the cover (3) in a screw-thread, or being axially fixed in the cover (3) and passing through the support part (52) in a screw-thread, the support part (52) being connected to the closure member (4) by push and pull rods (53), and preferably the support part (52) being disposed below a cross-member (22) held on the sink box (1) and the push and pull rods (53) passing through the cross-member in guide holes (54).

21. A sink box as claimed in Claim 20, characterised in that the screw (25) has a head (27) which is received in a stepped bore (29) in the stationary cover part (3).

## Revendications

1. Bouche d'égoût (1) pour eaux résiduaires, consistant en un corps (2) et un couvercle (5) placé dessus qui présente au moins une ouverture d'entrée (11), avec un organe de fermeture (4), l'organe de fermeture (4) maintenu à une partie fixe (3) du couvercle (5) étant déplaçable au choix entre une position fermée et une position ouverte, caractérisée en ce que chaque organe de fermeture (4) est déplaçable à partir de sa position fermée, dans laquelle il remplit l'ouverture d'entrée correspondante et dans laquelle sa face supérieure repose dans le même plan que la face supérieure de la partie fixe (3) du couvercle, pour la formation d'une fente d'ouverture annulaire entre les surfaces d'étanchéité (10, 16) de l'organe de fermeture (4) et la partie fixe (3) du couvercle par l'intermédiaire d'un mécanisme de réglage (6) accessible de l'extérieur, verticalement par rapport au plan de la partie fixe (3) du couvercle, dans la position ouverte.

2. Bouche d'égoût selon la revendication 1, caractérisée en ce que l'organe de fermeture (4) se trouve au-dessous ou au-dessus du plan du couvercle (5) dans la position d'ouverture.

3. Bouche d'égoût selon au moins une des revendications 1 ou 2, caractérisée en ce que la paroi (12) de l'ouverture d'entrée (11) et la surface périphérique (16) de l'organe de fermeture (4) convergent en direction de la position de fermeture.

4. Bouche d'égoût selon la revendication 3, caractérisée en ce que la paroi (12) de l'ouverture d'entrée (11) et la surface périphérique (13) de l'organe de fermeture sont des surfaces coniques.

5. Bouche d'égoût selon la revendication 3, caractérisée en ce que la paroi (12) de l'ouverture d'entrée (11) et la surface périphérique (13) de l'organe de fermeture (4) convergent avec une forme de gradin, de préférence avec des parties de paroi ou de surface axiales et radiales (35-40).

6. Bouche d'égoût selon au moins une des revendications 1 à 5, caractérisée en ce que l'organe de fermeture (4) comporte une bride (36) en partie inférieure, par laquelle il est en contact avec la face inférieure du couvercle (5) dans sa position de fermeture.

7. Bouche d'égoût selon la revendication 6, caractérisée en ce que l'ouverture d'entrée (11) est cylindrique et l'organe de fermeture (4) s'encastre dans l'ouverture d'entrée (11) avec une partie d'organe de fermeture cylindrique dans sa position de fermeture.

8. Bouche d'égoût selon la revendication 5 ou la revendication 7, caractérisée en ce que dans la position de fermeture de l'organe de fermeture (4), les parties de parois ou de surfaces cylindriques (37-40) présentent un léger écartement (c) entre elles.

9. Bouche d'égoût selon au moins une des revendications 1 à 8, caractérisée en ce que dans la paroi (12) de l'ouverture d'entrée ou dans la surface périphérique (13) de l'organe de fermeture (4), de préférence dans la surface (12, 13) qui est au-dessus de l'autre, est prévue une gorge circulaire (17a, 42) concentrique à l'axe longitudinal de l'ouverture d'entrée (11), dans laquelle est placé un joint annulaire d'étanchéité (17, 41), de préférence un joint torique.

10. Bouche dégoût selon la revendication 9, caractérisée en ce que la gorge circulaire (42) et le joint annulaire d'étanchéité (41) sont disposés dans l'une des parties de paroi ou de surface périphérique (35, 36) s'étendant radialement.

11. Bouche d'égoût selon la revendication 6 ou la revendication 7, caractérisée en ce que sur la face supérieure (47) de la bride (36) ou sur la face inférieure du couvercle (5) au-dessus de la bride (36), est prévue une gorge circulaire (48) concentrique à l'organe de fermeture (4), dans laquelle est logé un joint annulaire d'étanchéité (49), avantageusement un joint torique.

12. Bouche d'égoût selon au moins une des revendications 9 à 11, caractérisée en ce que les joints annulaires d'étanchéité font saillie hors des gorges circulaires dans lesquelles ils se trouvent.

13. Bouche d'égoût selon au moins une des revendications 1 à 12, caractérisée en ce que le mécanisme de. réglage (6) comporte une vis (25) qui traverse verticalement l'organe de fermeture (4) et comporte un organe d'actionnement (28) pour un outil rotatif à son extrémité extérieure, et qui traverse avec son extrémité intérieure une traverse (22) fixée à la bouche d'égoût (1), ladite vis étant soit fixée axialement dans la traverse et vissée dans un filetage de l'organe de fermeture (4), soit fixée axialement dans l'organe de fermeture (4) et vissée dans un filetage de la traverse (22).

14. Bouche d'égoût selon la revendication 13, caractérisée en ce que l'écartement (d) entre la traverse (22) et la face inférieure du couvercle (5) est supérieur à la course de déplacement de l'organe de fermeture (4).

15. Bouche d'égoût selon la revendication 12 ou la revendication 13, caractérisée en ce que la traverse (22) est formée par un étrier (18) en forme de U dont les branches sont fixées à la partie fixe du couvercle (5).

16. Bouche d'égoût selon au moins une des revendications 13 à 15, caractérisée en ce que la vis (25) comporte une tête (27) qui est contenue dans un alésage (29) en forme de gradin de l'organe de fermeture (4).

17. Bouche dégoût selon la revendication 16, caractérisée en ce que dans la paroi de l'alésage (29) est prévue une gorge circulaire (33) dans laquelle est logé un joint annulaire d'étanchéité (31), avantageusement un joint torique.

18. Bouche dégoût selon au moins une des revendications 1 à 17 caractérisée en ce que l'ouverture d'entrée (11) est disposée au milieu de la partie fixe du couvercle (5).

19. Bouche dégoût selon au moins une des revendications 1 a 17 caractérisée en ce qu'elle comporte plusieurs ouvertures d'entrée (11), de préférence excentrées, avec des organes de fermeture correspondants (4), et un mécanisme de réglage (6) commun à tous les organes de fermeture (4), avantageusement central.

20. Bouche dégoût selon la revendication 19, caractérisée en ce que le mécanisme de réglage (6) comporte une vis (25) traversant verticalement le couvercle (3), ladite vis présentant à son extrémité extérieure un organe d'actionnement (28) pour un outil rotatif et traversant par son extrémité intérieure une pièce de support (52), ladite vis (25) étant soit fixée axialement dans la pièce de support (52) et vissée dans un filetage du couvercle (3), soit fixée axialement dans le couvercle (3) et vissée dans un filetage de la pièce de support (52), la pièce de support (52) étant liée aux organes de fermeture (4) par des tiges poussantes et tirantes (53), et la pièce de support (52) étant avantageusement disposée sous une traverse (22) fixée à la bouche d'égoût (1), et les tiges tirantes et poussantes (53) traversant la traverse (22) par des trous de guidage (54).

21. Bouche dégoût selon la revendication 20, caractérisée en ce que la vis (25) comporte une tête (27) qui est contenue dans un alésage en forme de gradin (29) du couvercle fixe (3).
